(19) Europäisches Patentamt

European Patent Office

Office européen des brevets

(11) Veröffentlichungsnummer : **0 330 857 B1**

(12) **EUROPÄISCHE PATENTSCHRIFT**

(45) Veröffentlichungstag der Patentschrift :
**10.07.91 Patentblatt 91/28**

(51) Int. Cl.⁵ : **A22C 11/00**

(21) Anmeldenummer : **89101898.8**

(22) Anmeldetag : **03.02.89**

(54) **Positioniervorrichtung.**

(30) Priorität : **01.03.88 DE 3806467**

(43) Veröffentlichungstag der Anmeldung :
**06.09.89 Patentblatt 89/36**

(45) Bekanntmachung des Hinweises auf die
Patenterteilung :
**10.07.91 Patentblatt 91/28**

(84) Benannte Vertragsstaaten :
**AT BE CH ES FR LI NL**

(56) Entgegenhaltungen :
**EP-A- 0 129 864**
**EP-A- 0 189 763**
**DE-A- 3 437 830**
**DE-A- 3 442 070**
**US-A- 4 079 829**

(73) Patentinhaber : **JKL ROHEMA**
**MASCHINENBAU GMBH**
**In der Schneithohl 19**
**W-6242 Kronberg 2 (DE)**

(72) Erfinder : **Jahns, Rolf**
**Am Sportplatz 21**
**W-6374 Steinbach (DE)**

(74) Vertreter : **Dickel, Klaus, Dipl.-Ing.**
**Julius-Kreis-Strasse 33**
**W-8000 München 60 (DE)**

EP 0 330 857 B1

**Beschreibung**

Die Erfindung betrifft eine Vorrichtung zum Positionieren von mit Halteschlaufen versehenen Gegenständen auf Haltestangen mit mindestens einer umlaufenden Kette, auf welcher die die Gegenstände haltenden Schlaufen absetzbar sind, wobei die Kette im wesentlichen um ihre Längsachse um 180° drehbar ist, zur Übertragung der Halteschlaufen von der Kette auf die Haltestange.

Eine derartige Vorrichtung ist aus der DE-PS 34 37 830 bekannt. Diese Vorrichtung bietet in vorteilhafter Weise die Möglichkeit, an Schlaufen gehaltene Gegenstände selbsttätig, also ohne manuellen Eingriff, in gleichmäßigem Abstand auf einem Trägerelement anzuordnen. Von gravierendem Nachteil hierbei ist jedoch, daß die Vorrichtung keine wünschenswert hohe Betriebsgeschwindigkeit zuläßt. Bei höheren Taktgeschwindigkeiten werden die Schlaufen nicht sicher von dem Kettenschwert aufgenommen und fallen herab. Die das Kettenschwert haltenden Indexzylinder vermögen die Halteschlaufen der Gegenstände bei einem raschen Vorrücken der Kette nicht sicher zu übergreifen, und schließlich geraten bei höheren Betriebsgeschwindigkeiten die an den Halteschlaufen hängenden Gegenstände derart in Schwingung, daß sie von den jeweiligen Haltepunkten abgleiten können, womit der angestrebte gleichmäßige Abstand der Gegenstände nicht mehr gewährleistet ist.

In Kenntnis dieser Problematik liegt der Erfindung die Aufgabe zugrunde, die Vorrichtung der eingangs genannten Art so auszugetalten, daß eine hohe Betriebsgeschwindigkeit gefahren werden kann, bei zuverlässiger Funktion und Sicherstellung eines gleichmäßigen Abstandes der Gegenstände nach deren Aufreihen.

Gelöst wird diese Aufgabe gemäß der Erfindung durch die im Kennzeichen des Hauptanspruches angegebenen Merkmale, wobei hinsichtlich bevorzugter Ausgestaltungen der Vorrichtung auf die Merkmale der Unteransprüche verwiesen wird.

Nach der Erfindung ist an der Übernahmeposition der Schlaufen eine Einfangvorrichtung für dieselben vorgesehen, während beiderseits des Kettenschwertes um Vertikalachsen drehbar gehaltene und das Kettenschwert seitlich abstützenden Zahnräder sowie ein seitliches Ausrichtelement mit dreieckförmigen Richtplatten vorgesehen ist, welches von der Seite in die Bewegungsbahn der Gegenstände einschwenkbar ist. Diese Ausgestaltung ermöglicht eine beträchtlich erhöhte Takt- bzw. Betriebsgeschwindigkeit der Vorrichtung. Die Einfangvorrichtung an der Übernahmeposition der Schlaufen stellt einen positiven Eingriff des Schwertes mit den Schlaufen sicher, so daß ein Abgleiten und damit eine Funktionsstörung des Betriebes ausgeschlossen sind. Die seitlich des Kettenschwertes angeordneten Zahnräder stellen eine sichere Vertikalabstützung dar, während gleichzeitig die an den Halteschlaufen hängenden Gegenstände an den in Eingriff-befindlichen Zahnrädern vorbeigeführt werden können. Die nachteiligen Schwingbewegungen der Gegenstände werden auch bei hoher Taktzahl durch das Ausrichtelement verhindert, das mit seinen dreieckförmigen Richtplatten in die Bewegungsbahn der Gegenstände einschwenkbar ist. Hierdurch werden die Gegenstände jeweils zwischen den Bewegungstakten in ihrer Vertikalstellung fixiert.

Gemäß einer bevorzugten Ausführungsform der Erfindung umfaßt die Einfangsvorrichtung an der Übernahmeposition der Schlaufen einen Indexstift, der durch die Halteschlaufe des Gegenstandes mit der Spitze zur Anlage bringbar ist. Hierdurch bildet sich ein Ring, der die Schlaufe durchgreift, so daß durch diesen positiven Eingriff ein Abgleiten der Schlaufe unmöglich ist. Die Schlaufe läßt sich somit bei Weiterführung des Gegenstandes sicher auf das Schwert bzw. die Kette aufsetzen.

Vorzugsweise ist der Indexstift durch eine Kolben/Zylinderanordnung betätigbar, die eine der Betriebsgeschwindigkeit angepaßte Taktzahl zuläßt. Auch die Zahnräder sind zweckmäßigerweise jeweils über eine Kolben/Zylinderanordnung normal zur Längsachse des Kettenschwertes verschiebbar. Über einen hydraulischen oder pneumatischen Antrieb lassen sich somit die Zahnräder mit dem Kettenschwert zum Eingriff bringen.

Vorteilhafterweise sind die Begrenzungsflächen der Zähne ebenflächig ausgebildet und schließen einen Zahnspitzenwinkel ein, der 90° oder großer ist. Durch eine derartige Ausgestaltung läßt sich sicher vermeiden, daß die Halteschlaufen der Gegenstände von den Zähnen eingefangen werden, so daß sich hierauf beruhende Betriebsstörungen ausschließen lassen. Das Kettenschwert trägt vorteilhaft beiderseits zwei einander gegenüberliegende Längsnuten, mit welchen die Zahnräder zum Eingriff führbar sind. Es besteht damit ein formschlüssiger Eingriff zur sicheren Vertikalabstützung des Kettenschwertes.

Das Ausrichtelement ist gemäß einer zweckmäßigen Ausgestaltung der Erfindung von zwei Kolben/Zylinderanordnungen gehalten. Damit läßt sich das Element mittels Hydraulik- oder Pneumatikantrieb zwischen den beiden Positionen hin- und herschwenken.

Beim Einschwenken in die Bewegungsbahn der möglicherweise schwingenden Gegenstände werden die Halteschlaufen entlang der Kanten der dreieckförmigen Richtplatten geführt und somit in ihrer Sollposition fixiert. Zweckmäßigerweise ist dem Ausrichtelement gegenüberliegende ein Halteschlaufenabstützelement angeordnet, welches sicherstellt, daß die Schlaufen den Richtplatten nicht ausweichen. Zwischen den Richtplatten des Ausrichtelementes befindet sich gemäß einer besonders bevorzugten Ausführungsform der erfindungsgemäßen Vorrichtung je eine schlitzförmige Nut, die der Aufnahme der Halteschlaufen dient, wenn das Ausrichtelement in die Bewegungsbahn der Gegenstände eingeschwenkt ist. Damit ist eine sichere Positionierung der Gegenstände in gleichem Abstand gewährleistet.

Das Ausrichtelement kann unterhalb der Richtplatten jeweils Haken tragen, deren untere Enden über elastische Verbindungselemente, wie etwa Gummiringe, aneinander angeschlossen sind. Beim Einschwenken des Ausrichtelementes in die Bewegungsbahn der Gegenstände legen sich diese elastischen Elemente an die Gegenstände an, um die Schwingung zunächst zu dämpfen und sodann völlig zu unterbinden. Es ist zweckmäßig, den elastischen Verbindungselementen gegenüberliegend eine Führungseinrichtung für die Gegenstände anzuordnen, um ein Ausweichen der Gegenstände zu verhindern, so daß sie zwischen der Führungseinrichtung und den elastischen Verbindungselementen in ihrer Position festgehalten sind.

Weitere Vorteile, Einzelheiten und erfindungswesentliche Merkmale ergeben sich aus der nachfolgenden Beschreibung eines bevorzugten Ausführungsbeispiels der erfindungsgemäßen Vorrichtung, bei welcher es sich nur beispielhaft um die Positionierung von Würsten auf Rauchstangen handelt, unter Bezugnahme auf die beigefügten Zeichnungen. Dabei zeigt im einzelnen :

Fig. 1  Die Draufsicht auf die erfindungsgemäße Vorrichtung in schematischer Darstellung, wobei sich der Indexstift und die Zahnräder außer Eingriff mit der Schwertspitze bzw. dem Kettenschwert befindet, während das Ausrichtelement in die Bewegungsbahn der Gegenstände eingeschenkt ist,

Fig. 2  eine der Fig. 1 entsprechende Darstellung, wobei sich der Indexstift und die Zahnräder jeweils in Anlage befinden, während das Ausrichtelement aus der Bewegungsbahn der Gegenstände ausgeschwenkt ist,

Fig. 3  eine Seitenansicht der Vorrichtung im Bereich der Schwertspitze in einer ersten Betriebsstellung in schematischer Darstellung,

Fig. 4  eine der Fig. 3 entsprechende Darstellung in einer zweiten Betriebsstellung,

Fig. 5  eine der Fig. 3 entsprechende Darstellung in einer dritten Betriebsstellung der Vorrichtung,

Fig. 6  eine weitere Darstellung der Vorrichtung gemäß Fig. 3, in einer vierten Betriebsstellung,

Fig. 7  eine Vorderansicht der Zahnräder entsprechend der Schnittlinie VII-VII der fig. 8,

Fig. 8  die Draufsicht auf die Zahnradanordnung in schematischer Darstellung,

Fig. 9  eine Vorderansicht der Vorrichtung mit ausgefahrenem Ausrichtelement, wobei aus Gründen der Übersichtlichkeit nur die wesentlichen Konstruktionsmerkmale dargestellt sind,

Fig. 10  die Draufsicht auf den in Fig. 9 dargestellten Bereich der Vorrichtung,

Fig. 11  eine der Fig. 9 entsprechende Darstellung bei eingefahrenem Ausrichtelement und

Fig. 12  eine der Fig. 10 entsprechende Darstellung mit eingefahrenem Ausrichtelement.

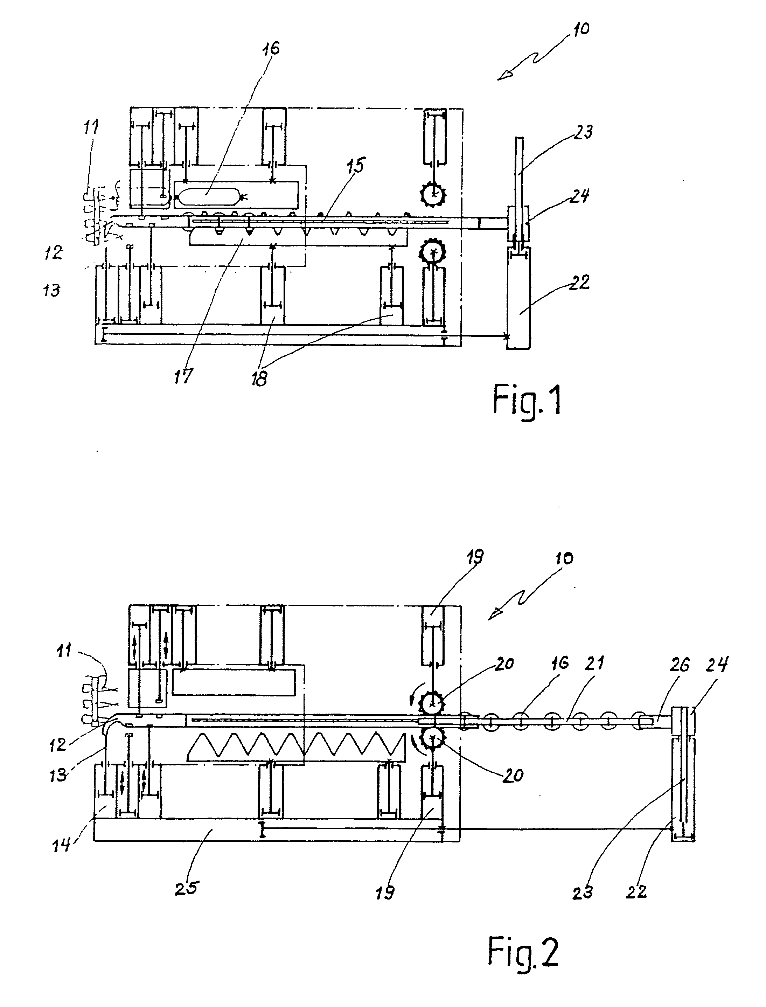

Der Gesamtaufbau der Vorrichtung soll zunächst anhand der Figuren 1 und 2 beschrieben werden, wobei zur Erläuterung im Detail auf die übrigen Darstellungen Bezug genommen wird.

Die Vorrichtung, die in ihrer Gesamtheit mit der Bezugsziffer 10 versehen ist, schließt sich unmittelbar an eine Befüllvorrichtung für Portionswürste an, die jeweils mit einem Metallclip an beiden Enden verschlossen werden, wobei in einen Clip einer oder mehrerer zusammenhängender Portionswürste eine Halteschlaufe mitverklemmt wird.

Im Augenblick des Verklemmens der Halteschlaufen 11 tritt die Vorrichtung 10 in Funktion. Wie nachfolgend noch näher erläutert wird, nimmt der Indexstift 13 die Halteschlaufe 11 auf, worauf, wie in Fig. 2 dargestellt ist, der Indexstift 13 über eine Kolben/Zylinderanordnung 14 in Anlage mit der Schwerspitze 12 geführt wird. Ein Herausgleiten der Schlaufe 11 ist somit nicht mehr möglich. Die Halteschlaufen mit den hieran hängenden Portionswürsten werden dann in einzelnen Taktschritten dem Obertrum einer umlaufenden Endloskette 15 zugeführt. Zur Positionsfixierung und zur Unterbindung einer Schwingbewegung der Würste 16 wird in einer ebenfalls noch näher zu erläuternden Weise ein Ausrichtelement 17 über Kolben/Zylinderanordnungen 18 in deren Bewegungsbahn eingeschwenkt.

Das rückwärtige Ende des die Kette 15 führenden Schwertes wird durch über Kolben/Zylinderanordnungen 19 translatorisch verschiebbare Zahnräder 20, die sich gemäß der Darstellung in Fig. 2 bei diesem Arbeitstakt in Eingriff mit dem Kettenschwert befinden, abgestützt.

Nachdem das Obertrum der Kette 15 über seine gesamte Länge in regelmäßigen Abständen an Halteschlaufen 11 hängende Würste 16 trägt, wird die Kette um ihre Längsache um im wesentlichen 180° gedreht. Vor der Drehung sind die Zahnräder 20, entsprechend der Darstellung in Fig. 1, entriegelt. Eine zuvor zwischen den Schlaufen 11 eingeschobene, das Untertrum der Kette 15 umgreifende Rauchstange übernimmt bei dieser Drehung die gesamte Reihe aufgehängter Würste 16. Die Drehung wird über eine von einer Kolben/Zylinderanordnung 22 betätigten Zahnstange 23 bewerkstelligt, die in ein drehfest mit der Kette 15 verankertes Zahnrad 24 eingreift. Eine über eine Kolben/Zylinderanordnung 25 betätigte Ausziehvorrichtung 26 zieht die Rauchstange 21 mit den hieran hängenden Würsten 16 aus der Vorrichtung 10 heraus. Dieser Gesamtzyklus wiederholt sich beim Betrieb der Maschine.

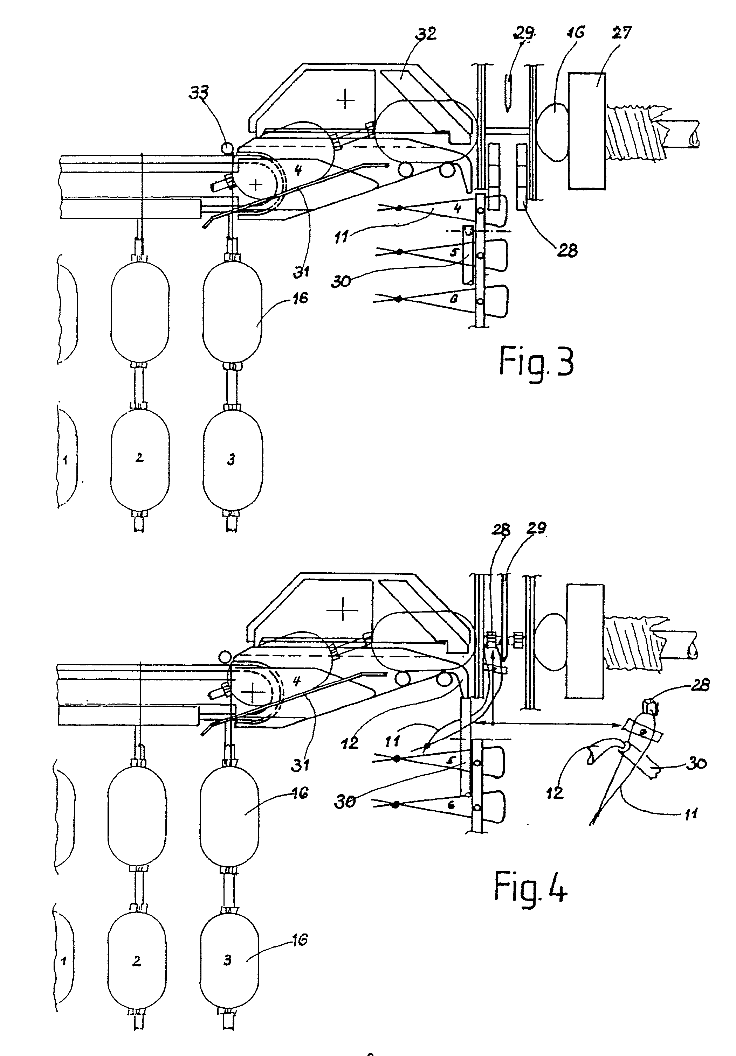

Entsprechend der Darstellung in Fig. 3 werden die die Befüllvorrichtung 27 verlassenden Würste 16 im materialfreien Zwischenabschnitt mit zwei Metallclips 28 versehen, wobei in einen Halteclip für eine oder mehrere Würste 16 eine Halteschlaufe 11 miteingeklemmt wird. Ein Messer 29 trennt, gemäß der Darstellung in Fig. 4, das materialfreie Zwischenstück zwischen den Clips 28 ab.

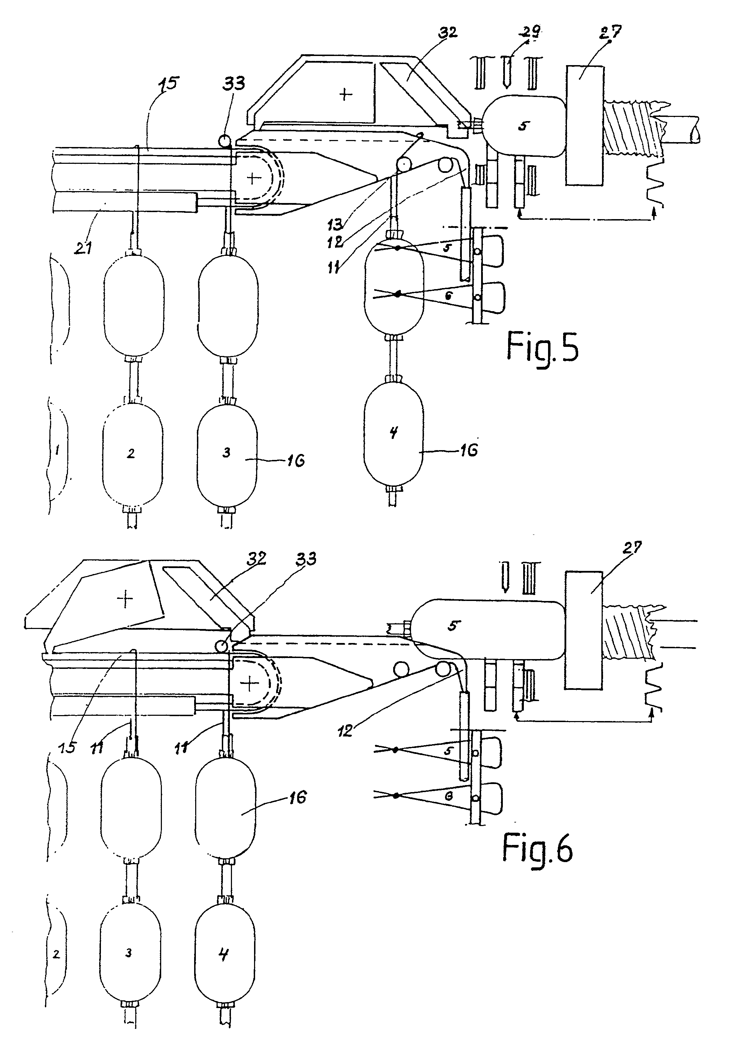

Die Halteschlaufe 11 wird, wie aus Fig. 4 deutlich wird, bei diesem Arbeitstakt von der Schwertspitze 12 und einem Indexstift 30, der sich endseitig an die Schwertspitze 12 anlegt, eingefangen. Die in Fig. 4 gezeigte, die Würste 16 abstützende Klappe 31 schwenkt nach unten, worauf,gemäß der Darstellung in Fig. 5, das Eigengewicht der Würste 16 die Halteschlaufe 11 auf die Schwertspitze 12 aufzieht. Eine im Arbeitstakt in Laufrichtung der Kette 15 verschiebbare Klammer 32 zieht die Halteschlaufe 11 mit den daran hängenden Würsten 16 von der Schwertspitze 12 ab und überträgt sie auf das Obertrum der Kette 15, wie aus der Darstellung in Fig. 6 deutlich wird. Ein Halteschlaufenanschlag 33 sorgt für ein positionsgenaues Absetzen der Halteschlaufen 11 auf der Kette 15. Der Arbeitstakt der Klammer 32 wird durch einen Schaltimpuls eingeleitet, der beim Herabfallen der Würste 16 ausgelöst wird.

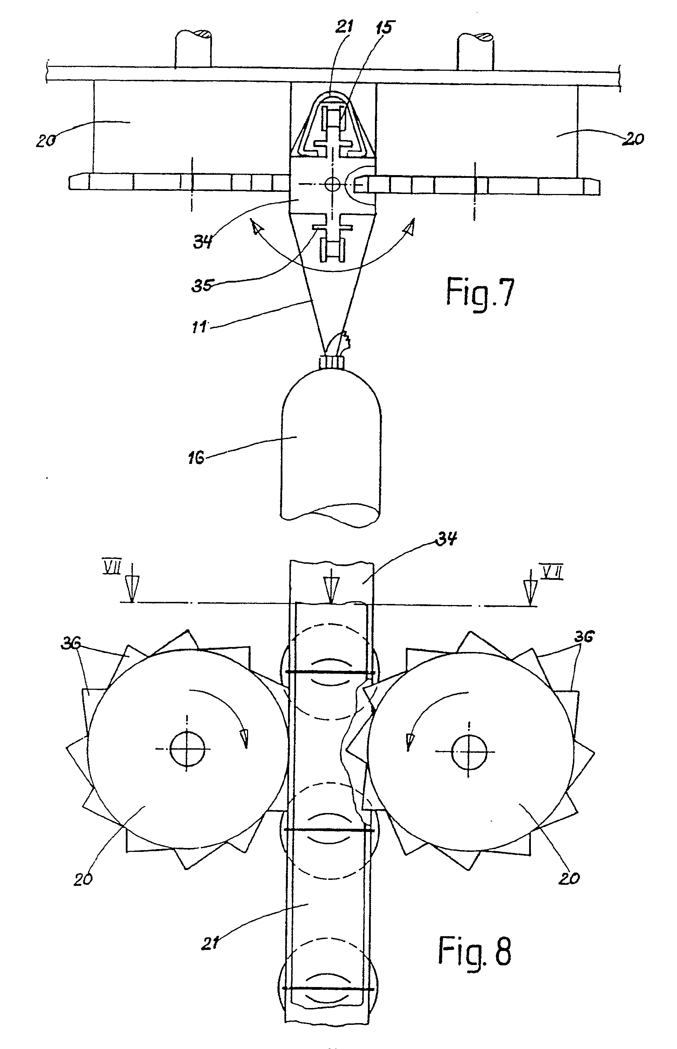

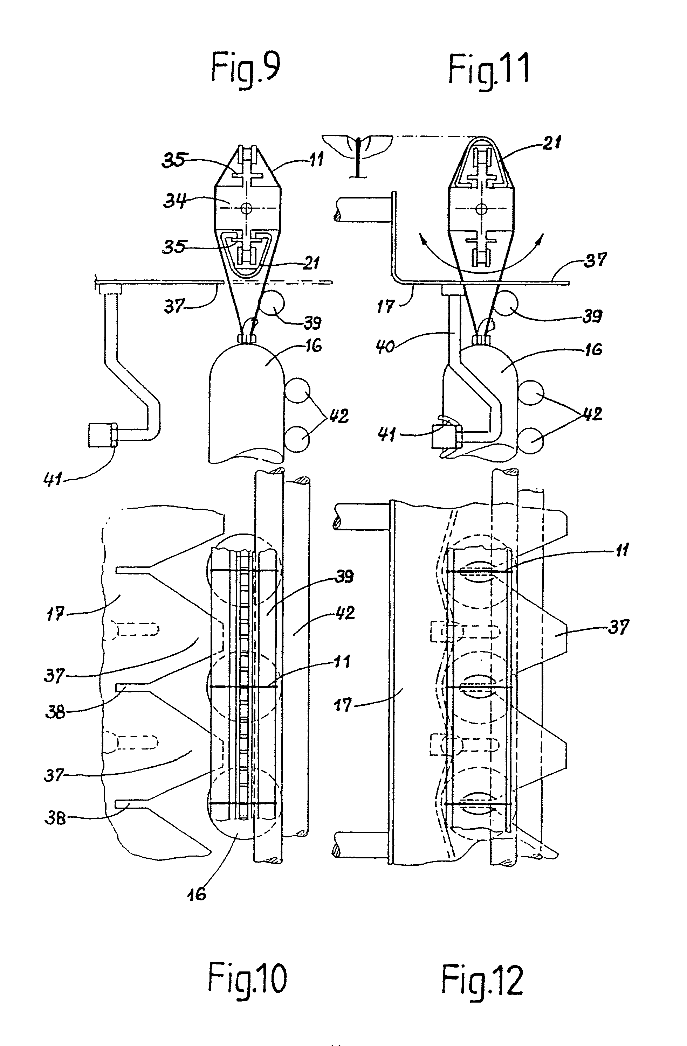

Wie bei der Erläuterung der Vorrichtung 10 anhand der Fig. 1 und 2 bereits herausgestellt wurde, dienen die im Detail in den Figuren 7 und 8 dargestellten Zahnräder 20 dazu, im besonderen während des Herausziehens des Rauchstockes 21, das freie Ende des Kettenschwertes 34 in vertikaler Richtung abzustützen. Wie bereits eingangs ausgeführt wurde, werden die Halteschlaufen 11, die die Würste 16 tragen, in regelmäßigen Abständen auf das Obertrum der Kette 15 aufgesetzt. Gemäß der Darstellung in Fig. 9 trägt das Kettenschwert 34 beidseitig zur Kette 15 hin jeweils eine Rauchstockschiene 35. Beim Aufsetzen der Schlaufen 11 auf das Obertrum der Kette 15 wird,das Untertrum umgreifend, auf die untere Rauchstockschiene 35 ein Rauchstock 21 aufgeschoben, der sich innerhalb der Schlaufen 11 befindet. Nachdem das Obertrum der Kette 15 voll mit Schlaufen 11 behängt ist, wird das Kettenschwert um 180° um seine Längsachse in die in Fig. 11 wiedergegebene Position gedreht, wobei nunmehr der Rauchstock 21 sämtliche Halteschlaufen 11 für die Würste 16 übernimmt.

Nach dem Drehvorgang fahren die Zahnräder 20, geführt durch die Kolben/Zylinderanordnungen 19 in die seitlichen Führungsnuten des Kettenschwertes 34 ein. Gleichzeitig verriegeln sich die Kettenräder 20 in einer nicht dargestellten Rollenkette. Beim Herausziehen des Rauchstockes 21 drehen sich die Zahnräder 20 zwangsgesteuert über die Rollenkette und lassen dabei die Gurtschlaufen 11 mit den hieran hängenden Würsten 16 zwischen den Zähnen 36 der Zahnräder 20 ohne nennenswerten Widerstand hindurch. Dabei sind die Begrenzungsflächen der Zähne 36 ebenflächig ausgebildet, und die Zahnflanken schließen einen Spitzen-winkel ein, der so gewählt ist, daß beim Einrutschen der Gurtschlaufen 11 diese nicht in der Nut des Kettenschwertes 34 eingeklemmt werden und ein Einfangen der Schlaufen 11 bei der Freigabe durch das Zahnrad 20 nicht zu befürchten ist. Ein geeigneter Spitzenwinkel liegt bei etwa 90°.

Wie bereits angedeutet, können bei hohen Taktgeschwindigkeiten durch das Schwingen der Würste 16 die Schlaufen auf dem oberen Trum der Kette 15 verrutschen, und im besonderen beim Drehen des Kettenschwertes für die Übernahme der Schlaufen 11 durch den Rauchstock 21 kann durch das Schwingen der Würste eine Ortsveränderung des Aufhängepunktes der Halteschlaufen 11 auftreten. Um dies zu verhindern, ist seitlich des Kettenschwertes 34 ein Ausrichtelement 17 vorgesehen, das mit seinen dreieckförmigen Richtplatten 37 in die Bewegungsbahn der Würste 16 schiebbar ist. In Fig. 9 ist die ausgeschwenkte Stellung in ausgezogenen Linien und die eingeschwenkte Stellung in strichpunktierten Linen wiedergegeben. Bei der Darstellung gemäß Fig. 11 befinden sich die Richtplatten 37 jeweils zwischen den Würsten 16.

Wie aus der Draufsicht gemäß den Figuren 10 und 12 deutlich wird, sind jeweils zwischen den Richtplatten 37 schlitzförmige Nuten 38 vorgesehen, die, entsprechend der Darstellung in Figur 12, bei eingeschwenktem Ausrichtelement 17 die Halteschlaufen 11 aufnehmen. Damit ist eine exakte Positionierung sichergestellt. Dem Ausrichtelement 17 gegenüberliegend ist ein stangenförmiges Abstützelement 39 gehalten, das ein Ausweichen der Halteschlaufen 11 beim Einfahren des Ausrichtelementes 17 verhindert.

Im rückwärtigen Bereich des Ausrichtelementes 17 sind im wesentlichen mittig unter den Richtplatten 37 Haken 40 gehalten, die bei eingefahrenem Ausrichtelement 17 ein Schwingen der Würste 16 in Vorschubrichtung verhindern.

Die unteren Enden jeweils nebeneinanderliegender Haken 40 sind durch Gummilaschen 41 miteinander verbunden. Wie die Fig. 9 zeigt, verhindern diese Gummilaschen oder -ringe 41 ein seitliches Schwingen der Würste 16 aus der Bewegungsbahn heraus. Auf der gegenüberliegenden Seite sind stabförmige Führungselemente 42 gehalten, die ein Ausschwingen der Würste 16 zur anderen Seite verhindern. Damit sind bei einer hohen Betriebsgeschwindigkeit und dementsprechend hoher Taktzahl die Würste sicher in ihrer Position in jeder Richtung fixiert.

Nach allem gestattet die beschriebene Vorrichtung einen funktionsstörungsfreien Betrieb bei einer hohen Arbeitsgeschwindigkeit.

## Ansprüche

1. Vorrichtung zum Positionieren von mit Halteschlaufen versehenen Gegenständen auf Haltestangen mit mindestens einer umlaufenden, in einem Kettenschwert geführten Kette, auf deren Obertrum die die Gegenstände haltenden Schlaufen absetzbar sind, wobei die Kette im wesentlichen um ihre Längsachse um 180° drehbar ist, zur Übertragung der Halteschlaufen von der Kette auf die Haltestange, **gekennzeichnet durch** eine an der Übernahmeposition der Halteschlaufen (11) für die Gegenstände (16) durch die Schwertspitze (12) vorgesehene Einfangvorrichtung (13) für die Halteschlaufen (11), durch beiderseits des Kettenschwertes (34) von Vertikalachsen drehbar gehaltene und das Kettenschwert (34) endseitig in Vertikalrichtung abstützende Zahnräder (20) sowie durch ein längliches Ausrichtelement (17) mit im wesentlichen dreieckförmigen Richtplatten (37), welches von der Seite in die Bewegungsbahn der Gegenstände (16) einschwenkbar ist.

2. Vorrichtung nach Anspruch 1, **dadurch gekennzeichnet,** daß die Einfang-vorrichtung einen Indexstift (13) umfaßt, der durch die Halteschlaufe (11) des Gegenstandes (16) mit der Schwertspitze (12) zur Anlage bringbar ist.

3. Vorrichtung nach Anspruch 2, **dadurch gekennzeichnet,** daß der Indexstift (13) durch eine Kolben/Zylinderanordnung (14) betätigbar ist.

4. Vorrichtung nach einem der vorangehenden Ansprüche, **dadurch gekennzeichnet,** daß die Zahnräder (20) jeweils über eine Kolben/Zylinderanordnung (19) normal zur Längsachse des Kettenschwertes (34) verschiebbar sind.

5. Vorrichtung nach einem der vorangehenden Ansprüche, **dadurch gekennzeichnet,** daß die Begrenzungsflächen der Zähne (36) der Zahnräder (20) ebenflächig ausgebildet sind und einen Zahnspitzenwinkel einschließen, der etwa 90° oder größer ist.

6. Vorrichtung nach einem der vorangehenden Ansprüche, **dadurch gekennzeichnet,** daß das Kettenschwert (34) zwei einander gegenüberliegende Längsnuten aufweist, in welche die Zahnräder (20) eingreifen.

7. Vorrichtung nach einem der vorangehenden Ansprüche, **dadurch gekennzeichnet,** daß das Ausrichtelement (17) von zwei Kolben/Zylindereinheiten gehalten ist, mittels welcher es zwischen beiden Positionen hin- und herschwenkbar ist.

8. Vorrichtung nach einem der vorangehenden Ansprüche, **dadurch gekennzeichnet,** daß dem Ausrichtelement (17) gegenüberliegend ein Abstützelement (39) für die Halteschlaufen (11) angeordnet ist.

9. Vorrichtung nach einem der vorangehenden Ansprüche, **dadurch gekennzeichnet,** daß zwischen den Richtplatten (37) des Ausrichtelementes (17) je eine schlitzförmige Nut (38) zur Aufnahme der Halteschlaufen (11) der Gegenstände (16) bei eingeschwenktem Ausrichtelement (17) vorgesehen ist.

10. Vorrichtung nach einem der vorangehenden Ansprüche, **dadurch gekennzeichnet,** daß das Ausrichtelement (17) unterhalb der Richtplatten (37) jeweils Haken (40) trägt, deren untere Enden über elastische Verbindungselement (41) aneinander angeschlossen sind.

11. Vorrichtung nach Anspruch 10, **dadurch gekennzeichnet,** daß den elastischen Verbindungselementen (41) gegenüberliegend eine Führungseinrichtung (42) für die Gegenstände (16) angeordnet ist.

## Claims

1. Positioning device for objects provided with arm straps on stay bars comprising at least one chain revolving about a chain guide, on the upper run of which the arm straps holding the object are deposited, the chain being turnable by substantially 180° about its longitudinal axis for transferring the arm straps from the chain to a stay bar, characterized by a catching device (13) for said arm straps (11) provided at the taking-over-position for the arm straps (11) of the objects (16) by the tip (12) of the chain guide, by toothed wheels (20) pivotably mounted on a vertical axis each on both sides of said chain guide (34) and supporting the end of said chain guide (34) in vertical direction, and by an elongated alignment element (17) having substantially triangular alignment plates (37) and being laterally pivotable into the movement path of said objects (16).

2. Device according to claim 1, characterized in that said catching device comprising an indexing pin (13) contacting the tip (12) of the chain guide through the arm straps (11) of the objects (16).

3. Device according to claim 2, characterized in that said indexing pin (13) can be activated by a piston/cylinder arrangement (14).

4. Device according to anyone of the preceding claims, characterized in that said toothed wheels (20) are movable by a piston/cylinder arrangement (19) each in normal direction to the longitudinal axis of the chain guide (34).

5. Device according to anyone of the preceding claims, characterized in that the periphies of the teeth (36) of said toothed wheels (20) are plane and encompass an angle of about 90° or larger.

6. Device according to anyone of the preceding claims, characterized in that said chain guide (34) comprises two longitudinal grooves opposite to each other for engagement with said toothed wheels (20).

7. Device according to anyone of the preceding claims, characterized in that said alignment element (17) is held between two piston/cylinder units for moving the same between the two positions.

8. Device according to anyone of the preceding claims, characterized in that a supporting element (39) for the arm staps (11) is positioned opposed to the aligning element (17).

9. Device according to anyone of the preceding claims, characterized by a slot (38) each being provided between the alignment plates (37) of said alignment element (17) for receiving the arm straps (11) of the objects (16) in the advanced position of the alignment element (17).

10. Device according to anyone of the preceding claims, characterized in that the alignment element (17) is provided with hooks (40) each below said alignment plates (37) the lower ends of which are connected to each other by elastic connecting elements (41).

11. Device according to claim 10, characterized in that a guiding device (42) for said objects (16) is provided opposing to the elastic connecting elements (41).

## Revendications

1. Dispositif de positionnement d'objets munis de boucles d'accrochage sur des barres, comprenant au moins une chaîne transporteuse guidée dans un dispositif de transfert, sur le brin supérieur de laquelle sont déposées les boucles pour l'accrochage des objets, la chaîne pouvant pivoter de 180° essentiellement autour de son.axe longitudinal pour transférer les boucles d'accrochage de la chaîne vers la barre, caractérisé par un dispositif de captation (13) des boucles d'accrochage (11) prévu dans la position de prise en charge des boucles d'accrochage (11) des objets (16) par la pointe du dispositif de transfert (12), par des roues dentées (20) montées pivotantes sur des axes verticaux de part et d'autre du dispositif de transfert (34) et supportant le dispositif de transfert (34) dans la direction verticale, ainsi que par un élément d'alignement (17) allongé comportant des plaques d'alignement (37) essentiellement triangulaires, qui peut être amené par pivotement latéralement sur la trajectoire de déplacement des objets (16).

2. Dispositif selon la revendication 1, caractérisé en ce que le dispositif de captation comporte un index (13) qui peut être amené en contact avec la pointe du dispositif de transfert (12) à travers la boucle d'accrochage (11) de l'objet (16).

3. Dispositif selon la revendication 2, caractérisé en ce que l'index (13) peut être commandé par un dispositif piston/cylindre (14).

4. Dispositif selon l'une des revendications précédentes, caractérisé en ce que les roues dentées (20) peuvent être déplacées par un dispositif piston/cylindre (19) perpendiculairement à l'axe longitudinal du dispositif de transfert (34).

5. Dispositif selon l'une des revendications précédentes, caractérisé en ce que les surfaces périphériques des dents (36) des roues dentées (20) sont planes et enferment un angle de sommet de dent qui est égal ou supérieur à 90° environ.

6. Dispositif selon l'une des revendications précédentes, caractérisé en ce que le dispositif de transfert (34) comporte deux rainures longitudinales situées en vis-à-vis dans lesquelles s'engagent les roues dentées (20).

7. Dispositif selon l'une des revendications précédentes, caractérisé en ce que l'élément d'alignement (17) est supporté par deux unités piston/cylindre à l'aide desquelles il peut être déplacé entre deux positions.

8. Dispositif selon l'une des revendications précédentes, caractérisé en ce qu'un élément d'appui (39) pour les boucles d'accrochage (11) est disposé en regard de l'élément d'alignement (17).

9. Dispositif selon l'une des revendications précédentes, caractérisé en ce qu'il est prévu entre les plaques d'alignement (37) de l'élément d'alignement (17) respectivement une rainure (38) en forme de fente recevant les boucles d'accrochage (11) des objets (16) lorsque l'élément d'alignement (17) est avancé.

10. Dispositif selon l'une des revendications précédentes, caractérisé en ce que l'élément d'alignement (17) comporte en-dessous des plaques d'alignement (37) des crochets (40) dont les extrémités inférieures sont reliées entre elles par des éléments de liaison (41) élastiques.

11. Dispositif selon la revendication 10, caractérisé en ce qu'un dispositif de guidage (42) pour les objets (16) est disposé en regard des éléments de liaison (41) élastiques.

Fig.1

Fig.2

Fig. 3

Fig. 4

Fig.5

Fig.6

Fig.7

Fig. 8

# Fig.9

# Fig.11

# Fig.10

# Fig.12